# EUROPEAN PATENT SPECIFICATION

(11) **EP 2 508 396 B1**
(45) Date of publication and mention of the grant of the patent: **17.06.2015**
(21) Application number: 10834738.6
(22) Date of filing: 24.11.2010
(51) Int. Cl.: B60R 21/01, B62D 6/00, B62D 5/00, B66F 9/075, B66F 17/00

(54) **DRIVING SAFETY DEVICE FOR INDUSTRIAL VEHICLE AND METHOD FOR SUPPLYING DRIVING SAFETY FUNCTION**
FAHRSICHERHEITSVORRICHTUNG FÜR EIN NUTZFAHRZEUG UND VERFAHREN ZUR EINRICHTUNG VON FAHRSICHERHEITSFUNKTIONEN
DISPOSITIF DE SÉCURITÉ DE CONDUITE POUR VÉHICULE INDUSTRIEL ET PROCÉDÉ POUR FOURNIR UNE FONCTION DE SÉCURITÉ

(30) Priority: 04.12.2009 KR 20090119676
(43) Date of publication of application: 10.10.2012
(73) Proprietor: Doosan Corporation, Jung-gu, Seoul 100-730 (KR)
(72) Inventor: MOON, Jin Wook, Incheon 401-020 (KR)
(74) Representative: Isarpatent
(86) International application number: PCT/KR2010/008322
(87) International publication number: WO 2011/068323

(56) References cited:
- EP-A1- 0 533 179
- EP-A2- 1 964 752
- JP-A- 8 337 106
- KR-A- 20050 018 105
- KR-A- 20050 094 954
- US-B2- 6 484 839

## Description

### [Technical Field]

The present invention relates to a device and a method for traveling safety in an industrial vehicle, and more particularly, to a device for traveling safety in an industrial vehicle that makes it possible to prevent the traveling wheel from warping due to external impact while an industrial vehicle travels, and a method of providing a traveling safety function.

### [Background Art]

Industrial vehicles that are used at the present time are most equipped with a safety device. The safety device is a device that relates to safety of a driver and warns the driver of safety by sending a message or sounding an alarm in an abnormal operation when a vehicle is operated.

Most of the safety devices are in connection with only the operation of a vehicle and a safety device for preventing an accident that may occur when a vehicle travels has not been considered.

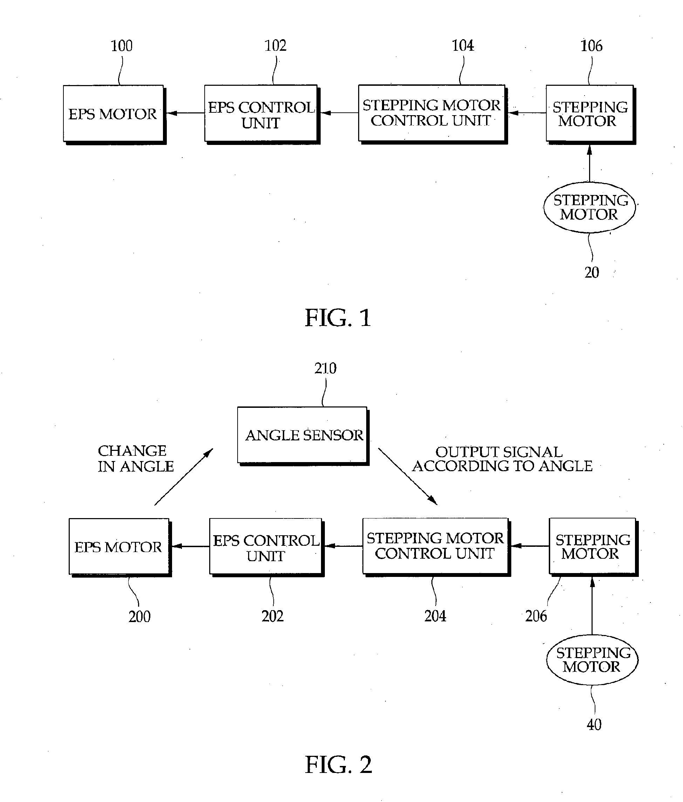

FIG. 1 is a configuration view of an electronic power steering (EPS) system of a stepping motor according to the related art. The operation of the internal configuration of EPS system of the related art when a vehicle travels will be described with reference to FIG. 1.

The output of a stepping motor 106 is generated according to operator of a steering wheel 20. That is, when the steering wheel 20 has been stopped, the stepping motor 106 does not generate output.

The output of the stepping motor 106 is transmitted to an EPS control unit 102 through a stepping motor control unit 104 and the EPS control unit 102 drives an EPS motor 100 on the basis of the signal.

When the traveling wheel becomes warped due to external impact with the steering wheel 20 stopped while a vehicle travels, an accident may be caused.

Therefore, it has been required to develop a safety function that can keep a driver safe against an accident that may occur while a vehicle travels.

EP 1 964 752 A2 discloses a device for traveling safety in an industrial vehicle, comprising: an angle sensor inserted in an actuator to sense rotation of a traveling wheel and configured to output an output signal according to a rotational angle of the traveling wheel.

### [Disclosure]

### [Technical Problem]

An object of the present invention is to provide a device for traveling safety in an industrial vehicle that can prevent the traveling wheel from warping due to external impact while a vehicle travels, and a method of providing a traveling safety function.

### [Technical Solution]

In order to accomplish the object of the present invention, a device for traveling safety in an industrial vehicle includes: an angle sensor inserted in an actuator to sense rotation of a traveling wheel and configured to output an output signal according to a rotational angle of the traveling wheel; a stepping motor operated by operating a steering wheel; a stepping motor control unit configured to output an operation signal for operating an EPS motor on the basis of the output from the stepping motor; and an electronic power steering (EPS) system control unit configured to drive the EPS motor on the basis of the operation signal transmitted to from the stepping motor control unit, in which the stepping motor control unit drives the EPS motor by using the EPS control unit to compensate a change in rotational angle of the traveling wheel on the basis of the output signal output from the angle sensor.

Further, the angle sensor according to an example of the present invention is a sensor that is mounted at a position where the angle sensor senses the rotational angles of the traveling wheels, and outputs a sensed change in angle as a voltage.

Further, in order to accomplish the object of the present invention, a method of providing a traveling safety function in an industrial vehicle includes: sensing rotation of a traveling wheel by using an angle sensor while the vehicle travels with a steering wheel stopped; and compensating the angle of the traveling wheel by the change in angle sensed y the angle sensor for traveling when rotation of the traveling wheel is sensed.

### [Advantageous Effects]

According to the present invention, it is possible to improve safety and sensitivity of a worker by fixing the rotational angle of a traveling wheel against an external impact that may occur while a vehicle travels.

### [Description of Drawings]

FIG. 1 is a configuration view of an EPS system of a stepping motor according to the related art.
FIG. 2 is a configuration view of an EPS system of a stepping motor according to an exemplary embodiment of the present invention.
FIG. 3 is a flowchart illustrating a process of providing a safety function while an industrial vehicle travels, in accordance with an exemplary embodiment of the present invention.

### [Mode for Carrying Out the Invention]

Hereinafter, exemplary embodiments of the present invention will be described with reference to the accompanying drawings. It should be noted that like reference numerals are given to like components at any parts in the drawings. Detailed features are described below and those are provided for helping generally understand the present invention. When it is determined that detailed descriptions for well-known technologies or configurations may unnecessarily make the point of the present invention unclear, the detailed descriptions are not provided in explaining the present invention.

A device for traveling safety in an industrial vehicle according to an exemplary embodiment of the present invention will be described with reference to FIG. 2.

The present invention makes it possible to sense rotation of a traveling wheel by inserting an angle sensor 210 in an actuator in order to determine warping of the traveling wheel due to an external impact while a vehicle travels. At this time, the angle sensor 210 may be a sensor that is mounted at a position where the sensor can sense the rotational angles of the traveling wheel, and outputs a sensed displacement in angle as a voltage.

Referring to FIG. 2, the output of a stepping motor 106 generated by operating a steering wheel 40 is transmitted to an EPS control unit 102 through a stepping motor control unit 104 and the EPS control unit 102 drives an EPS motor 100 on the basis of the signal.

In this case in the present invention, the angle sensor 210 outputs output signals according to the rotational angles of the traveling wheel to a stepping motor control unit 204. The output signals according to the rotational angles of the traveling wheel may be output as voltages.

The stepping motor control unit 204 drives an EPS motor 200 by using an EPS control unit 202 to compensate the displacement in rotational angle of the traveling wheel on the basis of the output signals output from the angle sensor 210.

At this time, the EPS control unit 202 can fix the angles of the traveling wheel to fit the direction of the steering wheel 40 by applying a current to the EPS motor 200 in order to compensate the rotational angles of the traveling wheel by the displaced angles.

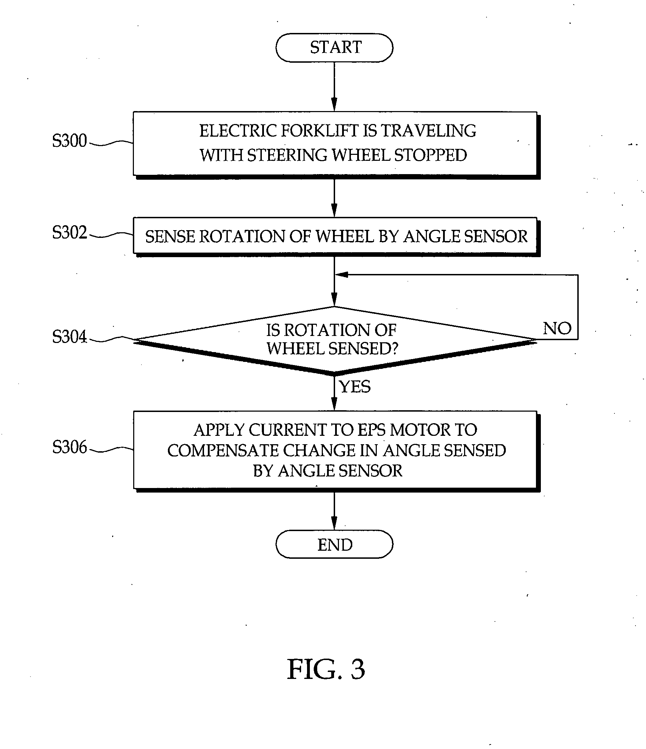

FIG. 3 is a flowchart illustrating a process of providing a safety function while an industrial vehicle travels, in accordance with an exemplary embodiment of the present invention.

First, it is assumed that an electric forklift is moving with the steering wheel stopped.

The angle sensor senses the rotational angles of the traveling wheel while the forklift travels (S302).

Thereafter, when rotation of the wheels is sensed in step S304, the process proceeds to step S306 and applies a current to the EPS motor to compensate the angles of the traveling wheel by the angle displacement sensed by the angle sensor.

Although a specific exemplary embodiment of the present invention was described above, it should be understood by those skilled in the art that the the scope of the present invention are not limited to the specific exemplary embodiment and the present invention may be changed and modified in various ways by those skilled in the art without departing from the scope of the present invention.

Therefore, the exemplary embodiments described above are provided to make those skilled in the art fully understand the scope of the present invention, such that the exemplary embodiments should be construed as not limiting the present invention, just as examples, and the present invention will be defined within claims.

### [Industrial Applicability]

The present invention may be applied to industrial vehicles at construction sites or factories with a high possibility of an accident by preventing warping of a traveling wheel due to an external impact that may occur while the vehicles travel, by fixing the rotational angle of the traveling wheel.

## Claims

1. A device for traveling safety in an industrial vehicle, comprising:
an angle sensor inserted in an actuator to sense rotation of a traveling wheel and configured to output an output signal according to a rotational angle of the traveling wheel;
a stepping motor operated by operating a steering wheel;
a stepping motor control unit configured to output an operation signal for operating a electronic power steering motor on the basis of the output from the stepping motor; and
an electronic power steering system control unit configured to drive the electronic power steering motor on the basis of the operation signal transmitted from the stepping motor control unit,
wherein the stepping motor control unit drives the electronic power steering motor by using the electronic power steering control unit to compensate a change in rotational angle of the traveling wheel on the basis of the output signal output from the angle sensor.

2. The device of claim 1, wherein the angle sensor is a sensor that is mounted at a position where the sensor senses the rotational angles of the traveling wheels, and outputs a sensed change in as a voltage

3. A method of providing a traveling safety function with the device of claim 1 or 2 in an industrial vehicle, the method comprising:
sensing rotation of a traveling wheel by using an angle sensor while the vehicle travels with a steering wheel stopped; and
compensating the angle of the traveling wheel for traveling by the change in angle sensed by the angle sensor when rotation of the traveling wheel is sensed.

## Patentansprüche

1. Vorrichtung für Fahrsicherheit in einem Nutzfahrzeug, die Folgendes umfasst:
- einen Winkelsensor, der in einen Aktuator eingesetzt ist, um die Drehung eines sich drehenden Rades abzufühlen, und dafür ausgebildet ist, ein Ausgangssignal gemäß einem Drehwinkel des sich drehenden Rades auszugeben;
- einen Schrittmotor, der durch Betätigen eines Lenkrades betrieben wird;
- eine Schrittmotorsteuereinheit, die dafür ausgebildet ist, ein Betätigungssignal zum Betreiben eines Motors einer elektronischen Lenkhilfe auf der Basis der Ausgabe des Schrittmotors auszugeben; und
- eine Steuereinheit für ein elektronisches Lenkhilfesystem, die dafür ausgebildet ist, den Motor der elektronischen Lenkhilfe auf der Basis des von der Schrittmotorsteuereinheit ausgesendeten Betätigungssignals anzusteuern,
wobei die Schrittmotorsteuereinheit den Motor der elektronischen Lenkhilfe mittels der Steuereinheit ansteuert, um eine Veränderung des Drehwinkels des sich drehenden Rades auf der Basis des von dem Winkelsensor ausgegebenen Ausgangssignals zu kompensieren.

2. Vorrichtung nach Anspruch 1, wobei der Winkelsensor ein Sensor ist, der an einer Position montiert ist, wo der Sensor die Drehwinkel der sich drehenden Räder abfühlt, und eine abgefühlte Veränderung als eine Spannung ausgibt.

3. Verfahren zum Bereitstellen einer Fahrsicherheitsfunktion mit der Vorrichtung nach Anspruch 1 oder 2 in einem Nutzfahrzeug, wobei das Verfahren Folgendes umfasst:
- Abfühlen einer Drehung eines sich drehenden Rades mittels eines Winkelsensors, während das Fahrzeug mit unbewegtem Lenkrad fährt; und
- Kompensieren des Winkels des sich drehenden Rades zum Fahren um die durch den Winkelsensor abgefühlte Veränderung des Winkels, wenn die Drehung des sich drehenden Rades abgefühlt wird.

## Revendications

1. Dispositif de sécurité de déplacement dans un véhicule industriel, comprenant :
- un capteur d'angle inséré dans un actionneur pour détecter la rotation d'une roue de déplacement et configuré pour délivrer un signal de sortie en fonction d'un angle de rotation de la roue de déplacement ;
- un moteur pas-à-pas actionné en actionnant un volant de direction ;
- une unité de commande de moteur pas-à-pas configurée pour délivrer un signal d'actionnement pour actionner un moteur de direction assistée électronique sur la base de la sortie du moteur pas-à-pas ; et
- une unité de commande de système de direction assistée électronique configurée pour entraîner le moteur de direction assistée électronique sur la base du signal d'actionnement transmis par l'unité de commande de moteur pas-à-pas,
dans lequel l'unité de commande de moteur pas-à-pas entraîne le moteur de direction assistée électronique en utilisant l'unité de commande de direction assistée électronique pour compenser une variation dans l'angle de rotation de la roue de déplacement sur la base du signal de sortie délivré par le capteur d'angle.

2. Dispositif selon la revendication 1, dans lequel le capteur d' angle est un capteur qui est monté à une position où le capteur détecte les angles de rotation des roues de déplacement, et délivre une variation détectée sous la forme d'une tension.

3. Procédé de fourniture d'une fonction de sécurité de déplacement avec le dispositif selon la revendication 1 ou 2 dans un véhicule industriel, le procédé comprenant de :
- détecter la rotation d'une roue de déplacement en utilisant un capteur d'angle tandis que le véhicule se déplace avec un volant de direction arrêté ; et
- compenser l'angle de la roue de déplacement pour se déplacer selon la variation dans l'angle détecté par le détecteur d'angle lorsque la rotation de la roue de déplacement est détectée.
